# EUROPEAN PATENT APPLICATION

(11) **EP 4 530 481 A1**
(43) Date of publication of application: **02.04.2025**
(21) Application number: 23200657.7
(22) Date of filing: 28.09.2023
(51) Int. Cl.: F16B 5/02, F16B 5/06, F16B 33/00, F16B 35/04, B64D 11/06, B60N 2/015, B60N 2/02, B64C 1/18, B64C 1/20, F16B 21/02

(54) **ADAPTABLE FIXATION INTERFACE FOR AN AIRCRAFT CABIN FLOOR**

(71) Applicant: Airbus Operations GmbH, 21129 Hamburg (DE)
(72) Inventor: Robrecht, Volker, Hamburg (DE); Benthien, Hermann, Hamburg (DE); Schulze, Wolfgang, Hamburg (DE)

(57) **Abstract**

The present invention relates to fixations in a floor area of an aircraft. In order to provide a light weight fixation interface with improved sealing, an adaptable fixation interface (10) for an aircraft cabin floor is provided. The interface comprises a plurality of connection studs (12) that comprise a mounting foot region (14) and a connection head region (16). The mounting foot region is configured to be inserted into one of a plurality of interface points in a floor arrangement. The connection head region is configured to be engaged by a fitting of an equipment to be fixed to the floor arrangement. The connection studs are configured to be releasably connected to adjacent interface points in a floor arrangement to provide a longitudinally extending fixation interface segment for mounting of equipment.

## Description

### FIELD OF THE INVENTION

The present invention relates to fixations in a floor area of an aircraft, and relates in particular to an adaptable fixation interface for an aircraft cabin floor, to an aircraft floor mounting system, to an aircraft floor arrangement with an adaptable fixation rail, to an aircraft and to a method for providing a fixation interface for an aircraft cabin floor.

### BACKGROUND OF THE INVENTION

Fixations in the floor area of an aircraft cabin are provided for mounting cabin interior equipment like passenger seats. An example for such fixations are so-called seat rails. Longitudinal profiles with a defined cross-section are provided that allow clamping of a seat leg fitting along the rail. The upper part of the seat rail provides recesses or protrusions for a form-fitting engagement of the fitting. Since the set rails may be provided throughout the cabin space, their upper profile should be flush with adjacent floor panels to avoid obstacles for passengers in areas where the seat rails are not used for fixation of seats. While the seat rails should be light, still allowing the releasable mount of equipment like passenger seats in various locations along the rail, an increasing demand exists regarding the sealing capacity along the seat rails.

### SUMMARY OF THE INVENTION

There may thus be a need for a light weight fixation interface with improved sealing.

The object of the present invention is solved by the subject-matter of the independent claims; further embodiments are incorporated in the dependent claims. It should be noted that the following described aspects of the invention apply also for the adaptable fixation interface for an aircraft cabin floor, for the aircraft floor mounting system, for the aircraft floor arrangement with an adaptable fixation rail, for the aircraft and for the method for providing fixation interface for an aircraft cabin floor.

According to the present invention, an adaptable fixation interface for an aircraft cabin floor is provided. The interface comprises a plurality of connection studs. The connection studs comprise a mounting foot region and a connection head region. The mounting foot region is configured to be inserted into one of a plurality of interface points in a floor arrangement. The connection head region is configured to be engaged by a fitting of an equipment to be fixed to the floor arrangement. The connection studs are configured to be releasably connected to adjacent interface points in a floor arrangement to provide a longitudinally extending fixation interface segment for mounting of equipment.

As an effect, the connection studs can be adapted to the actual demand, which allows weight savings, while still providing the option of improved sealing.

According to an example, the plurality connection studs are configured to form an adaptable rail-like fixation segment when the connection studs are mounted to a floor support structure. The rail-like fixation segment provides a connecting profile for mounting equipment comprising at least one of the group of seats and monuments.

According to an example, in a first option, the mounting foot region comprises at least one lateral protrusion for a form-fitting engagement with radial wall segments of a floor arrangement interface point. In a second option, provided in addition or alternatively, the connection head region comprises a flange-like protrusion for a form-fit clamping of an equipment fitting configured to be resting on an upper end face provided by the connection head region.

According to an example, the flange-like protrusion of the connection head region is having two opposite complementary abutment edges that are configured to provide a continuous fixation profile when several of the connection studs are mounted to a support beam in an adjacent manner.

In an option, the flange-like protrusion of the connection head region is having two further opposite edges transverse to the abutment edges. The further opposite edges are configured to provide lateral projections of the continuous fixation profile when several of the connection studs are mounted to the support beam in an adjacent manner.

In a further option, the flange-like protrusion of the connection head region also provides lateral indentations alternately arranged with the lateral projections when several of the connection studs are mounted to the support beam in an adjacent manner.

According to an example, a fitting is provided for mounting equipment to the fixation interface segment of the connection studs. The fitting comprises at least two fitting engaging portions to engage with at least two flange-like protrusions of the connection studs.

In an option, the fitting comprises at least two connection shoes with a slot like recess configured to slidingly engage with the connection head region. The connection shoes are movably attached to a body structure of the fitting such to be rotated to provide a locking against a release of the connection shoes from the connection head region.

In a further option, a visual locking indicator is provided.

According to an example, the connection studs are configured as an electric interface providing at least one conducting path for transmitting electric energy.

According to the present invention, also an aircraft floor mounting system is provided that comprises at least one adaptable fixation interface with a plurality of connection studs according to one of the examples above and at least one longitudinally extending clamping profile. The clamping profile comprises at least one outer section for holding an edge of at least one floor panel and a central recessed section for attaching the clamping profile to a floor support beam of an aircraft cabin. The connection studs are configured to be provided along the central section in the mounted state.

According to the present invention, also an aircraft floor arrangement with an adaptable fixation rail is provided. The floor arrangement comprises at least one floor support, a plurality of interface points provided on an upper side along at least a part of the floor support and at least one adaptable fixation interface with a plurality of connection studs according to one of the examples above. The interface points are configured to receive the mounting foot region of one of the connection studs.

According to an example, the floor arrangement further comprises at least one floor panel resting on the floor support and at least one clamping profile. The clamping profile is configured to hold an upper lateral edge of the floor panel in a clamping manner. The clamping profile is configured to be attached to the floor support by at least one of the group comprising the interface points and the connection studs.

According to an example, the clamping profile is having a central recess for the interface points. At least one floor filler segment is provided conforming with a contour of the central recess, the floor filler segment configured to be arranged in the central recess in parts without connection studs.

According to the present invention, also an aircraft is provided. The aircraft, comprises a fuselage and a wing arrangement attached to the fuselage. An aircraft cabin is provided within the fuselage, the cabin comprising a cabin floor. In a first option, the cabin floor comprises an aircraft floor mounting system according to one of the examples above. In a second option, the cabin floor is provided as a floor arrangement according to one of the examples above.

According to the present invention, also a method for providing fixation interface for an aircraft cabin floor is provided. The method comprises the following steps:
- Providing a plurality of connection studs each having a mounting foot region and a connection head region that is configured to be engaged by a fitting of an equipment to be fixed to the floor arrangement;
- Providing a floor arrangement with a plurality of interface points; and
- Inserting the mounting foot regions into adjacent interface points; the plurality of the connection head regions provide a longitudinally extending fixation interface segment for mounting of equipment.

According to an aspect, fixation or arresting studs, also referred to as connection studs, are provided for assembly of a floor structure. In an aspect, the fixation or arresting studs are also used for a form-fit clamping of floor panels with a stainless clamping layer.

The fixation or arresting studs are provided as a cabin interface for mounting equipment like seats or monuments to the floor construction.

According to an aspect, a floor connection interface is provided that comprises stainless surfaces towards the cabin space, while allowing load transfer to a non-stainless support structure, such as an aluminum support structure.

The fixation interface is an interface for mounting equipment to a floor in a cabin area. The fixation interface can thus also be referred to as cabin interface. The fixation interface is provided as an insertable and thus releasable bolt or stud. The bolt or stud has a sort of mushroom head for engagement by fittings for mounting equipment.

According to an aspect, a form-fit clamping of seats and panels is provided with a rather low-cost continuous stainless profile on an also low-cost aluminum hat profile.

The advantage of single components in form of the connection studs and the combination of only a few of them to create an interface provides the opportunity of a flexible layout configuration for an operator of the aircraft. Weight is only introduced where it is needed.

According to an aspect, the rail-like fixation segment is provided by a plurality of individual, i.e. separate parts. This allows to provide an adapted fixation rail arrangement, since the rail-like fixation segment can only be provided where necessary. This contributes to weight and also cost savings.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1a schematically shows an example of an adaptable fixation interface for an aircraft cabin floor in a top view.
Fig. 1b schematically shows the fixation interface of Fig. 1a in a side or elevation view.
Fig. 2 shows the adaptable fixation interface of Fig. 1 in the context of a transverse cross-section of an aircraft floor mounting system and an aircraft floor arrangement.
Fig. 3a shows another example of an adaptable fixation interface for an aircraft cabin floor, in a top view.
Fig. 3b schematically shows the fixation interface of Fig. 1a in a side view.
Fig. 4 shows another example of an aircraft floor arrangement.
Fig. 5 shows another example of an aircraft floor arrangement with a floor filler segment in a recessed area.
Fig. 6 shows a further example of an aircraft floor arrangement.
Fig. 7 shows a still further example of an aircraft floor arrangement with a mounted lug interface.
Fig. 8 shows a further example of an aircraft floor arrangement with a mounted lug interface.
Fig. 9a shows an example of a fitting in a horizontal view.
Fig. 9b shows the fittings of Fig. 9a in a pre-mounted state.
Fig. 9c shows the fittings of Fig. 9b in a locked mounted state.
Fig. 10 shows an example of an aircraft.
Fig. 11 shows basic steps of an example of a method for providing a fixation interface for an aircraft cabin floor.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

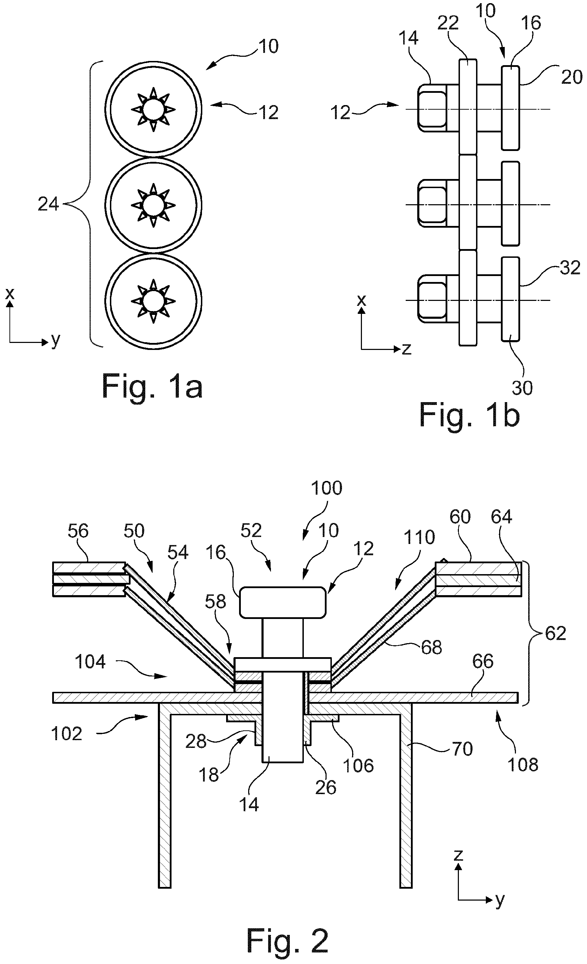

Fig. 1a schematically shows an example of an adaptable fixation interface 10 for an aircraft cabin floor in a top view. Fig. 1b schematically shows the fixation interface 10 of Fig. 1a in a side view. The adaptable fixation interface 10 comprises a plurality of connection studs 12. The connection studs 12 comprise a mounting foot region 14 and a connection head region 16, as indicated in Fig. 1a. The mounting foot region 14 is configured to be inserted into one of a plurality of interface points in a floor arrangement (see also Fig. 2). The connection head region 16 is configured to be engaged by a fitting of an equipment to be fixed to the floor arrangement. The connection studs 12 are configured to be releasably connected to adjacent interface points in a floor arrangement to provide a longitudinally extending fixation interface segment for mounting of equipment.

The interface points in a floor arrangement can be provided as floor arrangement interface points 18, see also Fig. 2. The interface points can also be provided for fulfilling further tasks, such as being interface points for connection of corrugated floor panels to floor support structures.

The term "fixation interface" relates to an arrangement that provides a mechanical interaction for mounting parts to the cabin floor. The parts can be releasably fixed by the interface. The fixation interface can also be referred to as fixation arrangement, mounting interface, mounting arrangement, connecting interface or connecting arrangement.

The term "adaptable" relates to the option to provide the engagement sections of the connection studs only where needed.

The term "aircraft cabin floor" relates to a floor within the aircraft cabin, e.g. delimiting the cabin area from a cargo area arranged below the cabin area within the fuselage of an aircraft.

The term "connection studs" relates to pin-like elements that can be inserted into recesses of a floor support for acting as connecting interface. The studs can also be referred to as bolts or pins. The connection studs may therefore have an insertion or mounting direction. In an option, the insertion or mounting direction is aligned with a Z-direction in an aircraft when being mounted, i.e. assembled.

The term "mounting foot region" relates to the lower end of the connection stud that is connected the floor support structure.

The term "connection head region" relates to the upper end of the connection stud that is provided for being engaged by the equipment to be fixed by the connection stud.

The term "adjacent" relates to neighboring studs, i.e. the next stud. In an option, the adjacent studs contact each other. In another option, the adjacent studs are provided displaced to each other, i.e. with a predetermined distance.

The term "interface points" relates to connecting portions or segments arranged for acting as a mechanical interface for the studs. The interface points may be added to a floor support structure or may be provided in an integrated manner.

The term "longitudinally extending" relates to a segment that is longer than its width and that runs e.g. in the direction of a linear arrangement of the interface points.

The term "fixation interface segment" relates to an interface provided by the several connection studs that is capable of receiving a fitting or the like for fixing equipment. The term "segment" indicates that along the linear arrangement of the interface points, also further segments can be provided. The segment forms a sort of rail segment. Several segments thus form a virtual rail with rail segments, i.e. rail sections, and interrupted rail segments, i.e. interrupted rail sections.

The term "equipment" relates to seats, monuments, lavatories, galleys and other parts provided within the cabin space.

The adaptable interface can also be referred to as adaptable seat fixation interface or adaptable monument fixation interface.

In an example, the fixation or arresting studs also provide a sealing, e.g. a sealing arrangement, device between the cabin space and a lower structure,
In an option, the fixation or arresting studs are made from stainless, i.e. non-corrosive material.

In an option, the connection studs are configured to form a rail. However, due to adapting the rail such that providing the interface only where needed, a strong weight reduction is provided. The supporting floor structure so-to-speak plays the role of providing a body structure of the rail, while the connection studs provide the engagement profile section.

The advantages of such a rail-type profile, i.e. the easy connectability of fittings along a small pitch allowing a large freedom of attachment positions, are used, while its disadvantages of meaning weight along the complete length are deleted.

In an example, as shown in Fig. 1 for example, the plurality connection studs 12 are configured to form an adaptable rail-like fixation segment 24 when the connection studs 12 are mounted to a floor support structure. The rail-like fixation segment 24 provides a connecting profile for mounting equipment comprising at least one of the group of seats and monuments.

In an example, not shown in detail, the mounting foot region 14 comprises at least one lateral protrusion 26 for a form-fitting engagement with radial wall segments 28, see also Fig. 2, of a floor arrangement interface point 18.

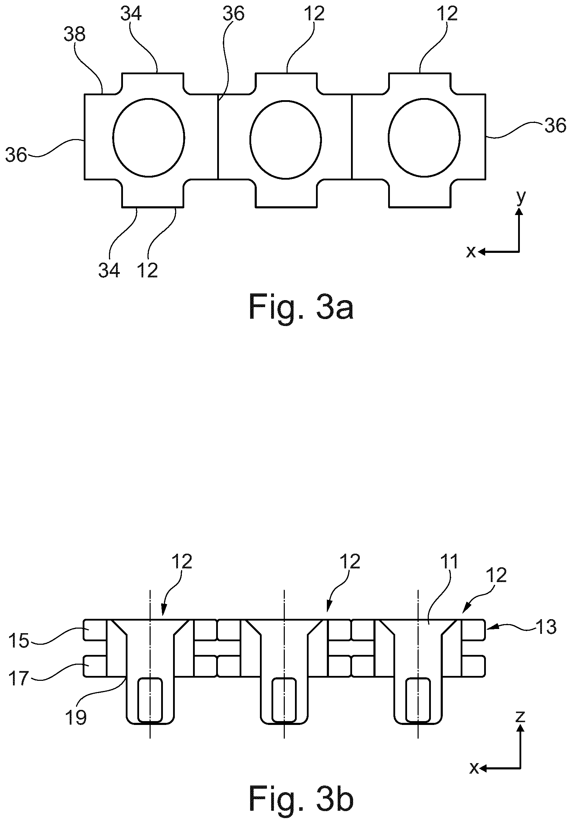

Fig. 3a shows another example of an adaptable fixation interface 10 for an aircraft cabin floor in a top view.

Fig. 3b schematically shows the fixation interface of Fig. 1a in a side view. In a shown example, the connection head region 16 comprises a flange-like protrusion 30 for a form-fit clamping of an equipment fitting configured to be resting on an upper end face 32 provided by the connection head region 16.

The term "lateral protrusion" relates to a part or portion that extends transverse to an insertion direction for engaging and thus holding of the connection stud within the support structure.

The term "flange-like protrusion" relates to a part or portion that extends transverse to the insertion direction and that allows an engagement by a form-fitting counterpart of a fitting or the like.

The term "upper end face" relates to the part of the connection stud that faces upwards in a mounted state, i.e. that faces the equipment to be mounted.

In an example, a quick release fitting for the fixation that creates the seat interface is provided.

In an example, the mounting foot region is provided as a quick release connector that comprises retractable protrusions at its distal end portion.

In another example, the mounting foot region is provided with an outer thread for engagement with an inner thread of the floor arrangement interface point.

In an example, the connection head region is provided as a circular flange that also provides the upper end face.

In an example, as shown in Fig. 1 for example, the flange-like protrusion 30 of the connection head region 16 is having two opposite complementary abutment edges 34 that are configured to provide a continuous fixation profile when several of the connection studs 12 are mounted to a support beam in an adjacent manner.

In an option, the flange-like protrusion 30 of the connection head region 16 is having two further opposite edges 36 transverse to the abutment edges 34. The further opposite edges 36 are configured to provide lateral projections of the continuous fixation profile when several of the connection studs 12 are mounted to the support beam in an adjacent manner.

In a further option, also shown as option in Fig. 3a, the flange-like protrusion 30 of the connection head region 16 also provides lateral indentations 38 alternately arranged with the lateral projections when several of the connection studs 12 are mounted to the support beam in an adjacent manner.

In an example, the connection head region is provided as a cross-shaped flange with four rectangular flange sections projecting along two axis that are perpendicular to each other and perpendicular to a stud insertion direction.

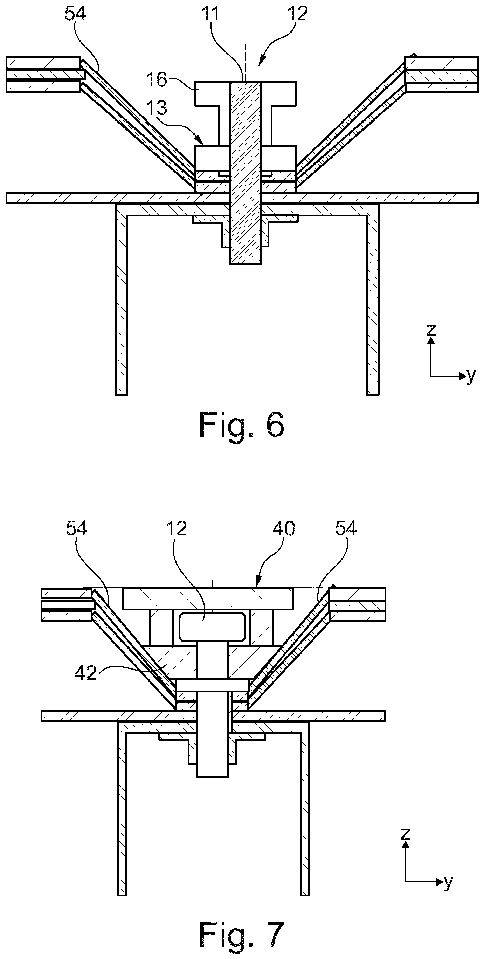

In an example, see also Fig. 7 for example, a fitting 40 is provided for mounting equipment to the fixation interface segment of the connection studs 12. The fitting 40 comprises at least two fitting engaging portions 42 to engage with at least two flange-like protrusions of the connection studs 12.

In an option, the fitting 40 comprises at least two connection shoes 44 with a slot like recess 46 configured to slidingly engage with the connection head region; the connection shoes 44 are movably attached to a body structure of the fitting such to be rotated to provide a locking against a release of the connection shoes 44 from the connection head region 16.

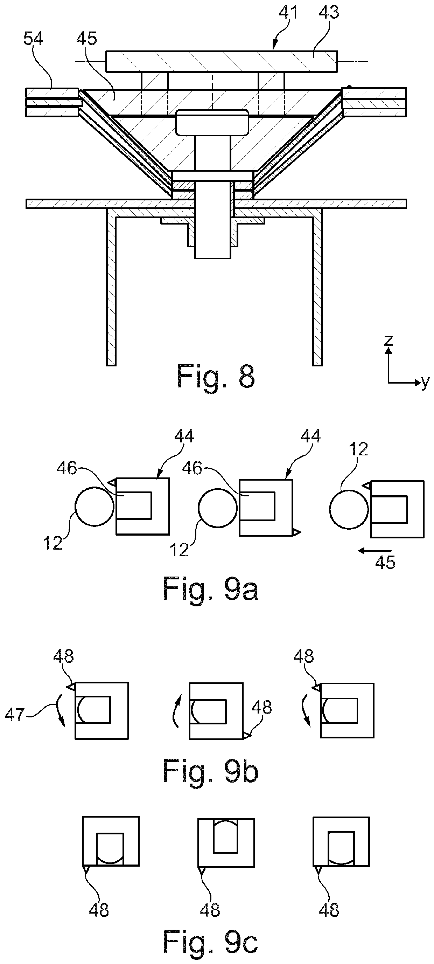

As a further option, a visual locking indicator 48 is provided. This will be explained further below with reference to Figs. 9a-c.

The term "fitting" relates to a connection or mounting interface portion provided for fixedly attaching the equipment to the floor support structure.

The term "connection shoe" relates to a portion of the fitting that can partly enclose a profile or shape of the connection head region.

The term "visual locking indicator" relates to an indicator that allows to check and verify the correct locking state by visual inspection.

In an option, the connection shoes are mounted to the body structure such that they can be commonly slided into their engaging position. In a first sub-option, the connection shoes are individually rotatable, i.e. the rotation is provided for the connection shoes in separate steps. In a second sub-option, the connection shoes are commonly rotatable, i.e. the rotation is provided for the connection shoes in one step.

In an option, a counter-rotation is provided for adjacent connection shoes.

In an option, a visual indicator is provided for an alternate rotation motion of at least a part of the connection shoes.

In an example, not shown in detail, the connection studs 12 are configured as an electric interface providing at least one conducting path for transmitting electric energy.

The term "electric interface" relates to providing electric connection via the interface. In a first option, conductors are provided by the connection stud itself. In a second option, additional conductors are provided that run through conduits provided by the connection studs.

In an example, the electric interface is providing two or more conducting paths.

In an example, the electric interface is configured for signal transmission. In another example, the electric interface is configured for energy supply. In a further example, the electric interface is configured for signal transmission and energy supply.

Fig. 2 shows the adaptable fixation interface of Fig. 1 in the context of a transverse cross-section of an aircraft floor mounting system 50 and also in the context of an aircraft floor arrangement 100.

The aircraft floor mounting system 50 comprises at least one adaptable fixation interface 52 with a plurality of connection studs 12 according to one of the examples above. The aircraft floor mounting system 50 also comprises at least one longitudinally extending clamping profile 54. The clamping profile 54 comprises at least one outer section 56 for holding an edge of at least one floor panel and a recessed central section 58 for attaching the clamping profile to a floor support of an aircraft cabin. The connection studs 12 are configured to be provided along the central section 58 in the mounted state.

Fig. 2 also shows a second outer section 60 for holding an edge of at least one further floor panel 62.

As an example, the floor panel is provided as a so-called corrugated floor panel having an upper sheet 64, also referred to as upper panel, and a lower sheet 66, also referred to as lower panel, separated by a center zone with a center layer folded in a way that it is connected to the upper sheet 64 and the lower sheet 66 in an alternating manner.

The term "clamping profile" relates to a profile for attaching floor panels by pressing them against a support surface. The floor panels are thus clamped on their edges.

The term "outer section" relates to the lateral part that engages with the panels.

The term "central recessed section" relates to a part forming a concave profile.

The central section is provided in a lengthwise direction of the longitudinal cover. The central recessed section allows the arrangement of the connection studs within the central recessed section. In an option, the mounted connection studs do not reach over the lateral parts of the clamping profile.

In an example, the clamping profile 54 is configured to be attached to a floor support beam 70 by at least one of the group comprising the interface points 18 and the connection studs 12.

As an example, the floor panels 62 are resting on the floor support beam 70.

In an example, the clamping profile is made from a noncorroding material.

In an example, the clamping profile is made from a stainless steel sheet.

In another example, the clamping profile is made from a sheet made from titanium.

As an example, the floor panels are provided as corrugated profiles, i.e. corrugated panels.

As indicated above, Fig. 2 shows the adaptable fixation interface 10 in the context of the aircraft floor arrangement 100 with the adaptable fixation rail.

The aircraft floor arrangement 100 comprises at least one floor support 102 like the floor support beam 70. The aircraft floor arrangement 100 also comprises a plurality of interface points 104 provided on an upper side along at least a part of the floor support 102. The aircraft floor arrangement 100 further comprises at least one example of the adaptable fixation interface 10 with a plurality of the connection studs 12 according to one of the examples above. The interface points 104 are configured to receive the mounting foot region 14 of one of the connection studs 12.

The term "floor support" relates to a floor support structure, such as a beam or carrier. The floor support can be provided as a separate beam structure or can be provided by a fuselage support structure.

As an advantage, a direct screwed connection to the primary structure of the floor support is provided.

The floor support can also be referred to as floor support carrier or floor support profile. The floor support can also be referred to as primary structure.

In an example, the floor panel is resting on an upper lateral edge region of the floor support.

A field of application is the installation of seats and monuments in a cabin of an aircraft.

In an example, the interface points are provided in an inch-wise pattern, i.e. with a determined fixed pitch over the complete length. In an option, the interface points are provided with a varying pattern.

In an example, the interface points are provided as blind nuts 106 with an inner thread aligned with through holes in an upper flange segment of the floor support like the floor support beam. The blind nuts 106 provide a bore in which the mounting foot region 14 of one of the connection studs 12 is inserted in an engaging manner with the blind nuts 106.

The term "blind nuts" relates to nut-like members fixed to the base structure.

The term "bore" relates to an opening or recess for insertion of the connection studs.

In an example, the interface points are provided as threaded bores with an inner thread.

In another example, the interface points are provided as drive-in nuts with an inner thread.

In a further example, the interface points are provided as milled or casted fixations inner engagement sections.

In an example, the floor arrangement further comprises at least one floor panel 108, like the floor panel 62, resting on the floor support 102. The floor arrangement further comprises at least one clamping profile 110, like the clamping profile 54. The clamping profile 110, e.g. as the clamping profile 54 mentioned above, is configured to hold an upper lateral edge of the floor panel 108 in a clamping manner. The clamping profile 110 is configured to be attached to the floor support 102 by at least one of the group comprising the interface points and the connection studs.

The term "floor panel" relates to panels provided in an aircraft cabin for carrying loads like passengers, luggage or trolleys. In an option, the floor panels provide a plate-like constructive part for load bearing. In an example, the floor panels also provide the floor surface like a carpet.

The term "upper lateral edge" relates to a part of the circumferential edge of the panels that faces the clamping profiles.

In an option, the clamping profile is configured to be attached to the floor support beam by at least one of the group comprising the interface points and the connection studs.

In an example, the clamping profile is providing a clamping holding force urging the floor panel against the floor support beam.

In an example, the clamping profile is configured to hold floor panel on both sides of the interface points.

In an option, the clamping profile is made from a noncorroding material.

In an example, for attaching the clamping profile to the floor support beam, through holes are provided in the clamping profile. The connection studs comprise a sealing for sealing off the through holes.

In case of non-mounted connection studs, a sealing insert is provided to seal off the through holes.

In an example, the floor support 102 is made from a corrosive material and the clamping profile 110 is made from a noncorroding material.

In an example, corrosion protection is provided between contacting surfaces of the parts made from noncorroding material and the parts made from corrosive material.

In an example, corrosion protection is provided between contacting surfaces of the floor support beam and the clamping profile.

In an example, the floor support beam is made from aluminum.

The terms "non-corrosive" and "corrosive" relate to substances, in particular liquids, present in a common aircraft cabin when used for usual passenger transport and onboard services.

Fig. 3a shows a top view of a rail segment formed by three connection studs 12.

Fig. 3b shows the respective side view or elevation view. The connection studs 12 are formed by a bolt 11, e.g. having an outer thread as the mounting foot region 14 for engaging with an inner thread provided in a support structure. Further, an upper body 13 is provided in which the bolt 11 is inserted. The upper body 13 provides an upper radially extending first collar 15 and a lower radially extending second collar 17. The upper body 13 has a recess 19 for inserting the bolt 11.

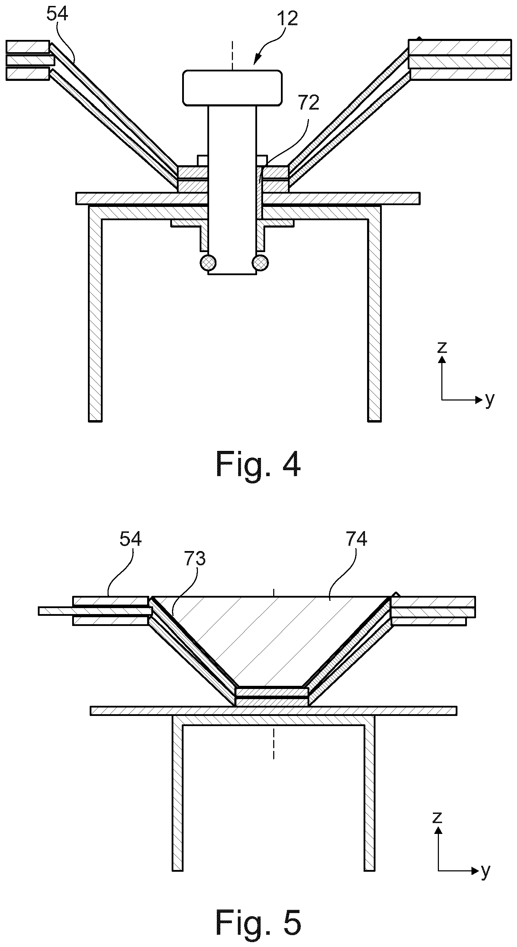

Fig. 4 shows another example of the aircraft floor arrangement 100. A connection stud 12 is inserted in an insert. The connection stud 12 is thus connected to the corrosive structure covered by the non-corrosive clamping profile 54. Additionally, a corrosion protection 72 is provided for connecting the connecting stud 12 to the different parts having different metal corrosion related properties.

In an example, shown in Fig. 5, the clamping profile 54 is having a central recess 73 for the interface points. Further, at least one floor filler segment 74 is provided conforming with a contour of the central recess. The floor filler segment 74 is configured to be arranged in the central recess e.g. in parts without connection studs 12.

In another option, the floor filler segment 74 comprises a recess on its lower side to be put over segments with mounted connection studs 12.

As an example, the filler segment 74 provides an upper even and flush surface.

As an example, when no interfaces and respective fittings are needed, the longitudinal groove is covered by the filling to provide an even cabin floor surface.

The filler also improves a liquid tightness of the floor construction.

Fig. 6 shows a further example of the aircraft floor arrangement where a plurality of the connection studs 12 is inserted forming a rail segment for mounting fittings.

Fig. 7 shows a still further example of an aircraft floor arrangement with a mounted lug interface as an example for the fitting 40. The lug interface provides a connection, for example for monuments or passenger seats.

In an option, the lug interface is provided with bevelled end faces to match with a narrowing recessed section of the clamping profile 54. In another option, the lug interface is resting on the upper end face of the connection stud 12.

Fig. 8 shows a further example of an aircraft floor arrangement with a mounted lug interface that has a raised section for mounting of e.g. seat fittings. The raised section provides an upper resting surface 41 and lateral protrusions for clamping engagement of seat fittings.

Fig. 9a shows an example of the fittings 40 in a horizontal view. The fittings are shown with their connection shoes 44. The connection shoes 44 are slid on to the upper end of the connection studs 12, partly engaging the head portion. The relative movement is indicated with a first movement arrow 45 leading to the state of Fig. 9b.

Fig. 9b shows the fittings of Fig. 9a in a pre-mounted state. The fittings are now turned in alternating directions. From the left: The first fitting is turned counter clockwise by approximately 90°. The second fitting is turned clockwise by approximately 90°. The third fitting is turned counter clockwise by approximately 90°. The movement is indicated with rotation arrows 47. The alternate rotation leads to a situation where a proper mount is given as the shoes can no longer moved in combination.

As an option, visual indicators are provided such that in a correct state, all fittings have the indicator 48 on the same side. This facilitates a check if all fittings are securely fastened. Fig. 9c shows the fittings of Fig. 9b in a locked mounted state. The indicators 48 point in the same direction.

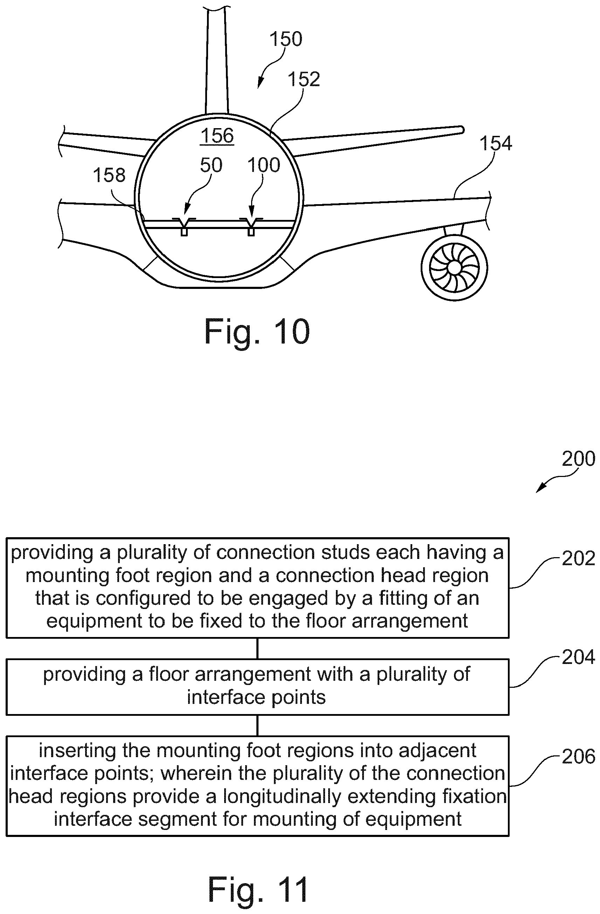

Fig. 10 shows an example of an aircraft 150. The aircraft 150 comprises a fuselage 152 and a wing arrangement 154 attached to the fuselage. An aircraft cabin 156 is provided within the fuselage 152, the cabin 156 comprising a cabin floor 158. In a first option, the cabin floor 158 comprises an example of the aircraft floor mounting system 50 according to one of the examples above. In a second option, alternatively or in addition, the cabin floor 158 is provided as an example of the floor arrangement 100 according to one of the examples above.

Fig. 11 shows basic steps of an example of a method 200 for providing a fixation interface for an aircraft cabin floor. The method 200 comprises the following steps:
- In a first step 202, a plurality of connection studs is provided each having a mounting foot region and a connection head region that is configured to be engaged by a fitting of an equipment to be fixed to the floor arrangement.
- In a second step 204, a floor arrangement with a plurality of interface points is provided.
- In a third step 206, the mounting foot regions are inserted into adjacent interface points. The plurality of the connection head regions provide a longitudinally extending fixation interface segment for mounting of equipment.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. An adaptable fixation interface (10) for an aircraft cabin floor, the interface comprising a plurality of connection studs (12);
wherein the connection studs comprise a mounting foot region (14) and a connection head region (16);
wherein the mounting foot region is configured to be inserted into one of a plurality of interface points in a floor arrangement;
wherein the connection head region is configured to be engaged by a fitting of an equipment to be fixed to the floor arrangement; and
wherein the connection studs are configured to be releasably connected to adjacent interface points in a floor arrangement to provide a longitudinally extending fixation interface segment for mounting of equipment.

2. Interface according to claim 1, wherein the plurality of connection studs are configured to form an adaptable rail-like fixation segment (24) when the connection studs are mounted to a floor support structure; and
wherein the rail-like fixation segment provides a connecting profile for mounting equipment comprising at least one of the group of seats and monuments.

3. Interface according to claim 1 or 2, wherein:
i) the mounting foot region comprises at least one lateral protrusion (26) for a form-fitting engagement with radial wall segments (28) of a floor arrangement interface point (18); and/or
ii) the connection head region comprises a flange-like protrusion (30) for a form-fit clamping of an equipment fitting configured to be resting on an upper end face (32) provided by the connection head region.

4. Interface according to claim 1, 2 or 3, wherein the flange-like protrusion of the connection head region is having two opposite complementary abutment edges (34) that are configured to provide a continuous fixation profile when several of the connection studs are mounted to a support beam in an adjacent manner; and
wherein the flange-like protrusion of the connection head region is having two further opposite edges (36) transverse to the abutment edges; and wherein the further opposite edges are configured to provide lateral projections of the continuous fixation profile when several of the connection studs are mounted to the support beam in an adjacent manner;
wherein the flange-like protrusion of the connection head region also provides lateral indentations (38) alternately arranged with the lateral projections when several of the connection studs are mounted to the support beam in an adjacent manner.

5. Interface according to one of the preceding claims, wherein a fitting (40) is provided for mounting equipment to the fixation interface segment of the connection studs; and wherein the fitting comprises at least two fitting engaging portions (42) to engage with at least two flange-like protrusions of the connection studs;
wherein the fitting comprises at least two connection shoes (44) with a slot like recess (46) configured to slidingly engage with the connection head region; and the connection shoes are movably attached to a body structure of the fitting such to be rotated to provide a locking against a release of the connection shoes from the connection head region; and
wherein a visual locking indicator (48) is provided.

6. Interface according to one of the preceding claims, wherein the connection studs are configured as an electric interface providing at least one conducting path for transmitting electric energy.

7. An aircraft floor mounting system (50), comprising:
- at least one adaptable fixation interface (52) with a plurality of connection studs according to one of the claims 1 to 6; and
- at least one longitudinally extending clamping profile (54);
wherein the clamping profile comprises at least one outer section (56) for holding an edge of at least one floor panel and a central recessed section (58) for attaching the clamping profile to a floor support beam of an aircraft cabin; and
wherein the connection studs are configured to be provided along the central section in the mounted state.

8. Mounting system according to claim 7, wherein the clamping profile is configured to be attached to the floor support beam by at least one of the group comprising the interface points and the connection studs.

9. An aircraft floor arrangement (100) with an adaptable fixation rail, the floor arrangement comprising:
- at least one floor support (102);
- a plurality of interface points (104) provided on an upper side along at least a part of the floor support beam; and
- at least one adaptable fixation interface (10) with a plurality of connection studs according to one of the claims 1 to 6;
wherein the interface points are configured to receive the mounting foot region of one of the connection studs.

10. Floor arrangement according to claim 9, wherein the interface points are provided as blind nuts (106) with an inner thread aligned with through holes in an upper flange segment of the floor support beam; and
wherein the blind nuts provide a bore in which the mounting foot region of one of the connection studs is inserted in an engaging manner with the blind nuts.

11. Floor arrangement according to claim 9 or 10, further comprising:
- at least one floor panel (108) resting on the floor support beam; and
- at least one clamping profile (110);
wherein the clamping profile is configured to hold an upper lateral edge of the floor panel in a clamping manner; and
wherein the clamping profile is configured to be attached to the floor support by at least one of the group comprising the interface points and the connection studs.

12. Floor arrangement according to claim 9, 10 or 11, wherein the floor support is made from a corrosive material and the clamping profile is made from a noncorroding material.

13. Floor arrangement according to claim 9, 10, 11 or 12, wherein the clamping profile is having a central recess (73) for the interface points; and
wherein at least one floor filler segment (74) is provided conforming with a contour of the central recess, the floor filler segment configured to be arranged in the central recess in parts without connection studs.

14. An aircraft (150), comprising:
- a fuselage (152); and
- a wing arrangement (154) attached to the fuselage;
wherein an aircraft cabin (156) is provided within the fuselage, the cabin comprising a cabin floor; and
wherein the cabin floor comprises an aircraft floor mounting system (50) according to claim 7 or 8; or
wherein the cabin floor is provided as a floor arrangement (100) according to one of the claims 9 to 13.

15. A method (200) for providing an fixation interface for an aircraft cabin floor, comprising the following steps:
- providing (202) a plurality of connection studs each having a mounting foot region and a connection head region that is configured to be engaged by a fitting of an equipment to be fixed to the floor arrangement;
- providing (204) a floor arrangement with a plurality of interface points; and
- inserting (206) the mounting foot regions into adjacent interface points; wherein the plurality of the connection head regions provide a longitudinally extending fixation interface segment for mounting of equipment.
